Europäisches Patentamt

European Patent Office

Office européen des brevets

(19)

(11)  EP 0 682 066 B2

(12)  NEUE EUROPÄISCHE PATENTSCHRIFT

(45) Veröffentlichungstag und Bekanntmachung des Hinweises auf die Entscheidung über den Einspruch:
**23.01.2002   Patentblatt 2002/04**

(51) Int Cl.[7]: **C08K 5/098**

(45) Hinweis auf die Patenterteilung:
**07.07.1999   Patentblatt 1999/27**

(21) Anmeldenummer: **95106195.1**

(22) Anmeldetag: **26.04.1995**

(54) **Verfahren zur Erhöhung des Anteiles der Beta-Modifikation in Polypropylen**

Method for increasing the ratio of beta-modification in polypropylene

Méthode d'augmentation de la proportion de la modification bèta dans polypropylène

(84) Benannte Vertragsstaaten:
**AT BE CH DE DK ES FR GB IT LI NL**

(30) Priorität: **13.05.1994  AT  99494**

(43) Veröffentlichungstag der Anmeldung:
**15.11.1995   Patentblatt 1995/46**

(73) Patentinhaber: **Borealis AG**
**2323 Schwechat-Mannswörth (AT)**

(72) Erfinder:
• **Wolfschwenger, Johannes, Ing.**
**A-4491 Niederneukirchen (AT)**

• **Bernreitner, Klaus**
**A-4020 Linz (AT)**

(74) Vertreter: **VA TECH Patente GmbH**
**Stahlstrasse 21 a**
**4020 Linz (AT)**

(56) Entgegenhaltungen:
**EP-A- 0 336 573         DE-A- 3 610 644**
**GB-A- 1 195 098         GB-A- 2 261 667**

**Beschreibung**

Die Erfindung betrifft ein Verfahren zur Erhöhung des Anteiles der β-Kristallmodifikation in Polypropylenen.

Polypropylen kristallisiert beim Abkühlen aus der Schmelze üblicherweise in der monoklinen α-Modifikation. Die hexagonale β-Modifikation, die sich vor allem durch bessere mechanische Eigenschaften, insbesondere durch eine verbesserte Schlagzähigkeit und erhöhte Spannungsrißbeständigkeit auszeichnet, wird bevorzugt durch Zusatz spezieller β-Keimbildner bzw. β-Nukleierungsmittel erhalten. Die β-Modifikation kann beispielsweise gemäß EP-B-177 961 durch Zusatz von Chinacridonpigmenten, gemäß DE-OS 36 10 644 durch Zusatz eines 2-Komponentengemisches aus

    a) einer zweibasischen organischen Säure und
    b) einem Oxid, Hydroxid oder Salz eines Metalles der Gruppe IIA des Periodensystems zum Polypropylen erhalten werden.

Neben den verbesserten mechanischen Eigenschaften ist das wesentlichste Merkmal von β-nukleierten Polypropylenen, daß die β-Modifikation bereits im Temperaturbereich von 148°C bis 152°C schmilzt, während die α-Modifikation erst über 160°C schmilzt.

Der Zusatz der bekannten β-Nukleierungsmittel weist jedoch vor allem den Nachteil auf, daß beispielsweise im Falle der Chinacridonpigmente schon bei sehr geringen Einsatzmengen von unter 10 ppm eine Rosaverfärbung des Polypropylens eintritt, die für viele Anwendungen ungeeignet ist. Das β-Nukleierungsgemisch gemäß DE-OS 36 10 644 besitzt vor allem den Nachteil, daß ein beachtlicher Teil des Polypropylens in der α-Modifikation vorliegen kann. Weitere Nachteile des Nukleierungsgemisches gemäß DE-OS 36 10 644 ergeben sich daraus, daß die eingesetzten Säuren bei den in modernen Extrusionsanlagen vorliegenden Bedingungen, wobei Temperaturen von bis zu 270°C und darüber vorliegen, sowie zusätzlich zur Entfernung niedermolekularer Verunreinigungen unter Vakuum gearbeitet wird, bereits verdampfen. Weiters zeigen diese Nukleierungsmittel ebenfalls eine gewisse Verfärbung des Polypropylens, die sich insbesondere durch einen zu hohen "Yellowness-Index" bemerbar macht.

Die Aufgabe der Erfindung bestand demnach vor allem darin, β-Nukleierungsmittel für Polypropylene zu finden, bei denen die oben angeführten Nachteile nicht auftreten und mit deren Hilfe Polypropylene mit hohem β-Kristallanteil erhalten werden. Diese Probleme konnten durch Zugabe bestimmter Dicarbonsäuresalze zu den Polypropylenen gelöst werden.

Gegenstand der Erfindung ist demnach ein Verfahren zur Erhöhung des Anteils der β-Modifikation in Polypropylenen, das dadurch gekennzeichnet ist, daß man die Polypropylene gemeinsam mit Dicarbonsäuresalzen von Metallen der 2. Hauptgruppe des Periodensystems als β-Keimbildner und gegebenenfalls mit weiteren üblichen Zusätzen aufschmilzt und anschließend abkühlt., wobei die Oxalate von Metallen der Z. Hauptgruppe in Mengen von 0,5-60 Gew.Teilen bezogen auf 100 Gew.Teile Polypropylen bei den Dicarbonsäuresalzen nicht mit umfasst sind.

Ein weiterer Gegenstand der Erfindung ist die Verwendung von Dicarbonsäuresalzen von Metallen der 2. Hauptgruppe des Periodensystems als β-Keimbildner in Polypropylenen.

Zur Bestimmung des Anteils an β-Modifikation gibt es mehrere Möglichkeiten. Zum einen kann der Anteil an β-Modifikation aus der DSC-Analyse aus dem Verhältnis der Schmelzpeaks aus der zweiten Aufheizung gemäß Formel:

$$(\beta\text{-Fläche}):(\alpha\text{-Fläche} + \beta\text{-Fläche})$$

ermittelt werden. Eine weitere Möglichkeit ist die Bestimmung des β-Anteils durch den k-Wert aus dem Röntgenweitwinkeldiagramm mit der Turner-Jones-Gleichung (A. Turner-Jones et al., Makromol. Chem 75 (1964) 134):

$$k = H\beta_1 / [H\beta_1 + (H\alpha_1 + H\alpha_2 + H\alpha_3)]$$

Dabei bedeuten $H\alpha_1$, $H\alpha_2$ und $H\alpha_3$ die Höhe der drei starken α-Peaks und $H\beta_1$ die Höhe des starken β-Peaks. Der k-Wert ist bei Abwesenheit der β-Form Null und hat den Wert 1, wenn nur die β-Modifikation vorhanden ist. Die nach den beiden Bestimmungsmethoden erhaltenen Werte sind jedoch nicht unbedingt gleich. Da die β-Modifikation thermodynamisch instabil ist und sich ab etwa 150°C in die energetisch günstigere α-Modifikation umwandelt, wandelt sich in der DSC-Analyse bei einer Aufheizrate von beispielsweise 10°C/min ab 150°C ein gewisser Anteil der β-Modifikaiton in die α-Modifikation um (Zeit zum Aufheizen von 150°C bis zum Schmelzpunkt des α-PP), wodurch im Endeffekt die DSC-Analyse immer einen geringeren β-Anteil im PP anzeigt als tatsächlich vorhanden ist.

Beim erfindungsgemäßen β-Keimbildner handelt es sich um ein Einkomponentensystem, welches bis etwa 400°C thermisch stabil ist. Mit dem vorliegenden β-Keimbildner kann ohne Zugabe weiterer Additive ein Anteil an β-Modifikation von bis über 80% (nach DSC-Methode) bzw. mit einem k-Wert nach Turner-Jones von mindestens 0,94 bis zu 0,97 erreicht werden. Ähnlich hohe Anteile an β-Modifikation werden auch erreicht, wenn das Polypropylen weitere Zusätze wie z. B. Antioxidantien, UV-Stabilisatoren, Lichtschutzmittel, Gleitmittel, Antiblockmittel, Antistatika, Farbmittel, chem. Degradiermittel und/oder Füllstoffe enthält.

Erfindungsgemäß können als β-Keimbildner bzw. β-Nukleierungsmittel auch Gemische verschiedener Dicarbonsäuresalze eingesetzt werden. Die erfindungsgemäß eingesetzten Dicarbonsäuresalze enthalten bevorzugt mindestens 7 C-Atome, besonders bevorzugt sind Salze der Pimelinsäure oder Suberinsäure, beispielsweise Ca-Pimelat oder Ca-Suberat.

Die Konzentration der β-Keimbildner im Polypropylen ist vor allem vom gewünschten Gehalt an β-Kristalliten abhängig und beträgt bevorzugt 0,001 bis 2, besonders bevorzugt 0,01 bis 1 Gew.% bezogen auf das Polypropylen. Unter Polypropylenen sind sowohl Homopolymere des Propylens als auch Copolymere mit weiteren olefinischen Comonomeren, wie z. B. Ethylen, Buten, Penten, 1-Methylpenten, Hexen, Octen zu verstehen. Der Gehalt an Comonomeren in den Propylen-Coplymeren liegt üblicherweise bei etwa 2 bis 50 Mol%. Es können sowohl statistische als auch Blockcopolymere eingesetzt werden. Bevorzugt werden Polypropylene mit einer überwiegend stereoregulären Anordnung in der Polymerkette, wie z. B. isotaktische oder elastomere Polypropylene eingesetzt, wie sie beispielsweise als Daplen[R] bei Fa. PCD-Polymere erhältlich sind, bzw. in DE-A- 43 21 498 beschrieben sind. Der Anteil der stereoregulären Polypropylene in den verwendeten Polypropylenen liegt bevorzugt bei über 80 Gew.%.

Die erfindungsgemäß β-nukleierten Polypropylene können nach üblichen Fertigungsmethoden, wie z. B. durch Extrusion oder Spritzguß, zu Fertigteilen mit guten mechanischen Eigenschaften weiter verarbeitet werden.

Vergleichsbeispiel V1

Ein Polypropylenhomopolymer-Pulver (PP-B) mit einem Schmelzindex (MFI bei 230°C/2,16 kg gemäß ISO 1133/DIN 53735) von 0,3 g/10 min (entsprechend Daplen BE 50 von Fa. PCD-Polymere) wurde mit 0,2 Gew.% Ca-Stearat (Fa. Faci) als Katalysatordesaktivator und inneres Gleitmittel, 0,1 Gew.% Irgafos PEPQ (Ciba-Geigy) und 0,2 Gew.% Irganox 1010 (Ciba-Geigy) als Stabilisatoren bzw. Antioxydantien und 0,3 Gew.% Distearylthiodipropionat (DSTDP, Fa. Ciba-Geigy) als Wärmestabilisator in einem Intensivmischer gemischt und auf einem Einschneckenextruder bei einer Massetemperatur von 230°C geknetet und granuliert. Das Granulat wurde bei 220°C zu 2,5 mm dicken Platten verpreßt. Der an diesen Platten gemessene k-Wert nach Turner-Jones betrug 0,01, entsprechend einem Anteil von 1 % β-Polypropylen-Kristalliten.

Beispiele 2 - 5

Analog zu Vergleichsbeispiel V1 wurden Platten aus Polypropylen hergestellt, wobei jedoch die in Tabelle 1 angeführten β-Keimbildner und Additive zugesetzt wurden. Die an den Platten gemessenen K-Werte liegen bei mindestens 0,94, entsprechend einem Gehalt von mindestens 94 % β-Polypropylen-Kristalliten. Die K-Werte sowie die nach der DSC-Methode gemessenen Werte für den %-Anteil an β-Kristallen sind ebenfalls in Tabelle 1 angeführt.

Die als β-Keimbildner verwendeten Ca-Salze der Dicarbonsäuren (Pimelin- und Suberinsäure) wurden durch Reaktion von einem Mol Dicarbonsäure mit einem Mol $CaCO_3$ in wäßrig-ethanolischer Lösung bei 60 bis 80°C hergestellt. Das als feiner Niederschlag ausfallende Salz wurde abfiltriert und bis zur Gewichtskonstanz getrocknet.

Tabelle 1

| Bsp. | Ca-stearat (%) | Irgafos PEPQ(%) | Irganox 1010 (%) | DSTDP (%) | β-Keimbildner (%) | k-Wert (Turner-Jones) | β-Anteil (DSC %) |
|---|---|---|---|---|---|---|---|
| V1 | 0,2 | 0,1 | 0,2 | 0,3 | | 0,01 | unter 2 |
| 2 | 0,2 | 0,1 | 0,2 | 0,3 | 0,1 Ca-Pimelat | 0,97 | 70,4 |
| 3 | | 0,1 | 0,2 | 0,3 | 0,1 Ca-Pimelat | 0,96 | 73,6 |
| 4 | | 0,1 | 0,2 | 0,3 | 0,1 Ca-Suberat | 0,94 | 79,6 |
| 5 | | | | | 0,1 Ca-Suberat | 0,97 | 80,8 |

Beispiele 6 bis 15

Die in Tabelle 2 angeführten Polypropylenpulver (PP) wurden jeweils mit 0,05 Gew.% Magnesiumaluminium-hydroxycarbonat (MAHC, Fa. Kyowa) als Katalysatordesaktivator, 0,05 Gew.% Ca-Stearat, 0,05 Gew.% Irgafos 168, 0,05 Gew. Irganox 1010, sowie in den Beispielen 7, 9, 11, 13 und 15 zusätzlich mit 0,1 Gew.% Ca-Pimelat als β-Keimbildner in einem Intensivmischer gemischt und auf einem Zweischneckenextruder bei einer Massetemperatur von 230°C extrudiert und granuliert. An dem Granulat wurde der Anteil an β-Modifikation nach der DSC-Methode ermittelt. Die Werte sind in Tabelle 2 zusammengestellt.

Tabelle 2

| Beispiel | PP | β-Keimbildner (0,1 %) | β-Anteil (DSC/%) |
|---|---|---|---|
| 6 | PP-B | - | unter 2 |
| 7 | PP-B | Ca-Pimelat | 73,9 |
| 8 | PP-D | - | unter 2 |
| 9 | PP-D | Ca-Pimelat | 76,3 |
| 10 | PP-K | - | unter 2 |
| 11 | PP-K | Ca-Pimelat | 78,0 |
| 12 | PP-CHC | - | 0 |
| 13 | PP-CHC | Ca-Pimelat | 72,4 |
| 14 | PP-DSC | - | unter 2 |
| 15 | PP-DSC | Ca-Pimelat | 81,5 |

Eingesetzte PP-Pulver:

PP-B: Propylenhomopolymer mit einem Schmelzindex (230/2,16) von 0,3g/10 min
PP-D: Propylenhomopolymer mit einem Schmelzindex (230/2,16) von 2,0g/10 min
PP-K: Propylenhomopolymer mit einem Schmelzindex (230/2,16) von 7,0g/10 min
PP-CHC: statistisches Propylen/Ethylen ($C_3/C_2$)-Copolymer mit einem $C_2$-Gehalt von 8mol-% und einem Schmelzindex von 1,2 g/10 min
PP-DSC: heterophasisches $C_3/C_2$-Copolymer mit einem $C_2$-Gehalt von 20 mol-% und einem Schmelzindex von 3,2 g/10 min

Die verwendeten PP-Typen entsprechen kommerziell erhältlichen PP-Typen von Fa. PCD Polymere. Der Schmelzindex wurde bei 230°C/2,16 kg gemäß ISO 1133/DIN 53735 gemessen.

Vergleichsbeispiel V 16

Ein Polypropylenpulver mit einem Schmelzindex von 7 g/10 min (PP-K) wurde mit 0,05 Gew.% Irgafos 168, 0,05 Gew.% Irganox 1010 sowie gemäß DE-OS 36 10 644 mit 0,1 Gew.% Ca. Stearat und 0,1 Gew.% Pimelinsäure als β-Keimbildner in einem Intensivmischer gemischt und auf einem Einschneckenextruder bei einer Massetemperatur von 230°C extrudiert und granuliert. Aus dem Granulat wurden Platten mit einer Dicke von 3 mm spritzgegossen und der Yellownessindex (YI) gemäß ASTM D 1925 mit einem Wert von 4,9 gemessen. Der Yellownessindex ist ein Maß für die Gelbstichigkeit des Polymeren.
Der Anteil an β-PP-Kristallen lag gemäß DSC bei 69 %

Beispiele 17 und 18

Analog zu Vergleichsbeispiel V16 wurden PP-Platten aus PP-K hergestellt, wobei jedoch an Stelle von Ca-Stearat und Pimelinsäure als β-Keimbildner erfindungsgemäß 0,1 Gew.% Ca-Pimelat zugesetzt wurden. In Beispiel 17 wurden zusätzlich 0,1 Gew.% Ca-Stearat zugesetzt. Der Yellowness-Inex lag bei den erfindungsgemäß β-nukleierten Polypropylenen bei -2,6 (Beispiel 17) und -2,2 (Beispiel 18), also deutlich besser als gemäß Vergleichsbeispiel V16.
Der Anteil an β-PP-Kristalliten lag gemäß DSC bei 84,4 % (Beispiel 17) bzw. 74,4 % (Beispiel 18).

**Patentansprüche**

1. Verfahren zur Erhöhung des Anteils der β-Modifikation in Polypropylenen, **dadurch gekennzeichnet, dass** man die Polypropylene gemeinsam mit Dicarbonsäuresalzen von Metallen der 2. Hauptgruppe des Periodensystems als β-Keimbildner und gegebenenfalls mit weiteren üblichen Zusätzen aufschmilzt und abkühlt, wobei die Oxalate von Metallen der 2. Hauptgruppe in Mengen von 0,5-60 Gew.Teilen bezogen auf 100 Gew.Teile Polypropylen bei den Dicarbonsäuresalzen nicht mitumfasst sind.

2. Verfahren gemäss Anspruch 1, **dadurch gekennzeichnet, dass** die Dicarbonsäure mindestens sieben Kohlenstoffatome enthält.

3. Verfahren gemäss Anspruch 1, **dadurch gekennzeichnet, dass** die Dicarbonsäure Pimelinsäure oder Suberinsäure ist.

4. Verfahren gemäss einem der Ansprüche 1 bis 3, **dadurch gekennzeichnet, dass** das Dicarbonsäuresalz Ca-Pimelat oder Ca-Suberat ist.

5. Verfahren gemäss einem der Ansprüche 1 bis 4, **dadurch gekennzeichnet, dass** die beta -Keimbildner in einer Konzentration von 0,001 bis 2 Gew.%, bezogen auf das Polypropylen eingesetzt werden.

6. Verfahren gemäss einem der Ansprüche 1 bis 5, **dadurch gekennzeichnet, dass** die eingesetzten Polypropylene einen überwiegend stereoregulären Aufbau besitzen.

7. Verwendung von Dicarbonsäuresalzen von Metallen der 2. Hauptgruppe des Periodensystems als β-Keimbildner in Polypropylenen.

**Claims**

1. Process for increasing the proportion of the β-modification in polypropylenes, **characterized in that** the polypropylenes are melted together with dicarboxylic acid salts of metals of the 2nd main group of the Periodic Table as β nucleating agents and optionally with further conventional additives and cooled, the oxalates of metals of the $2^{nd}$ main group, in amounts of 0.5 - 60 parts by weight, based on 100 parts by weight of polypropylene, not being included in the dicarboxylic acid salts.

2. Process according to Claim 1, **characterized in that** the dicarboxylic acid contains at least seven carbon atoms.

3. Process according to Claim 1, **characterized in that** the dicarboxylic acid is pimelic or suberic acid.

4. Process according to any of Claims 1 to 3, **characterized in that** the dicarboxylic acid salt is Ca pimelate or Ca suberate.

5. Process according to any of Claims 1 to 4, **characterized in that** the β nucleating agents are used in a concentration of 0.001 to 2% by weight, based on the polypropylene.

6. Process according to any of Claims 1 to 5, **characterized in that** the polypropylenes used have a predominantly stereoregular structure.

7. Use of dicarboxylic acid salts of metals of the 2nd main group of the Periodic Table as β nucleating agents in polypropylenes.

**Revendications**

1. Procédé d'augmentation de la proportion de la modification β dans le polypropylène, **caractérisé en ce que** l'on procède à la fusion et au refroidissement du polypropylène, conjointement à des sels d'acides dicarboxyliques de métaux du 2ème groupe principal du système périodique, en tant qu'agents de formation de germes β, et, le cas échéant, conjointement à des adjuvants usuels supplémentaires, les oxalates de métaux du 2ème groupe principal n'étant pas compris, dans le cas des sels d'acides dicarboxyliques, dans des quantités de 0,5-60 parts en poids par rapport à 100 parts en poids de polypropylène.

2.   Procédé selon la revendication 1, **caractérisé en ce que** l'acide dicarboxylique contient au moins sept atomes de carbone.

3.   Procédé selon la revendication 1, **caractérisé en ce que** l'acide dicarboxylique est l'acide pimélique ou l'acide subérique.

4.   Procédé selon l'une quelconque des revendications 1 à 3, **caractérisé en ce que** le sel d'acide dicarboxylique est le pimélate de Ca ou le subérate de Ca.

5.   Procédé selon l'une quelconque d☐es revendications 1 à 4, **caractérisé en ce que** les agents de formation de germes β sont utilisés dans une concentration de 0,001 à 2 % en poids, par rapport au polypropylène.

6.   Procédé selon l'une quelconque des revendications 1 à 5, **caractérisé en ce que** les propylènes utilisés possèdent une structure essentiellement une stéréorégulière.

7.   Utilisation de sels d'acides dicarboxyliques de métaux du 2ème groupe principal du système périodique en tant qu'agents de formation de germes β dans le polypropylène.